(19) **Europäisches Patentamt European Patent Office Office européen des brevets**

(11) **EP 2 318 173 B1**

(12) **FASCICULE DE BREVET EUROPEEN**

(45) Date de publication et mention de la délivrance du brevet:
**03.04.2013 Bulletin 2013/14**

(21) Numéro de dépôt: **09784209.0**

(22) Date de dépôt: **16.06.2009**

(51) Int Cl.:
***B23K 20/12*** *(2006.01)*

(86) Numéro de dépôt international:
**PCT/FR2009/000713**

(87) Numéro de publication internationale:
**WO 2010/004109 (14.01.2010 Gazette 2010/02)**

(54) **PROCEDE DE SOUDAGE PAR FRICTION MALAXAGE PULSE AVEC AU MOINS DEUX MODES ALTERNES AYANT CHACUN UNE VITESSE D'AVANCE, OÙ LES VITESSES D'AVANCE MOYENNE SONT SIGNIFICATIVEMENT DIFFERENTES**

MINDESTENS ZWEI ABWECHSELNDE MODI, DIE JEWEILS EINE VORSCHUBGESCHWINDIGKEIT AUFWEISEN, VERWENDENDES GEPULSTES REIBRÜHRSCHWEISSVERFAHREN, WOBEI SICH DIE MITTLEREN VORSCHUBGESCHWINDIGKEITEN DEUTLICH UNTERSCHEIDEN

PULSED FRICTION STIR WELDING METHOD USING AT LEAST TWO ALTERNATING MODES, EACH OF WHICH HAS A FEED RATE, THE MEAN FEED RATES BEING SIGNIFICANTLY DIFFERENT

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **30.06.2008 FR 0803662**
**07.08.2008 US 86840 P**

(43) Date de publication de la demande:
**11.05.2011 Bulletin 2011/19**

(73) Titulaire: **Constellium France**
**75008 Paris (FR)**

(72) Inventeurs:
• **BORDESOULES, Isabelle**
**F-38120 Saint Egreve (FR)**

• **HANTRAIS, Christian**
**F-38850 Chirens (FR)**
• **ARMENIO, Jean-Pierre**
**F-38430 Moirans (FR)**

(74) Mandataire: **Butruille, Jean-Remi Pierre Marie**
**Constellium CRV**
**Service Propriété Industrielle**
**Parc Economique Centr'Alp**
**725, rue Aristide Bergès, BP 27**
**38341 Voreppe Cedex (FR)**

(56) Documents cités:
DE-A1- 19 953 260    JP-A- 2003 088 964
US-A1- 2004 046 003    US-A1- 2006 054 666
US-B1- 6 450 394

## Description

L'invention concerne un procédé de soudage par friction malaxage d'au moins une première pièce métallique en un alliage métallique A avec au moins une deuxième pièce en un alliage métallique B dissemblable selon le preambule de la revendication 1 (voir, par exemple, US 2006/054666).

## Etat de la technique

Il est généralement connu que, lors de la fabrication de produits semi-finis et d'éléments structuraux pour la construction aéronautique, certaines propriétés requises ne peuvent généralement pas être optimisées simultanément indépendamment les unes des autres. Tel est parfois le cas des propriétés rassemblées sous le terme « résistance mécanique statique » (notamment la résistance à la rupture Rm et la limite d'élasticité Rp0,2) d'une part, et des propriétés rassemblées sous le terme « tolérance aux dommages » (notamment la ténacité et la résistance à la propagation des fissures) d'autre part. Pour chaque utilisation envisagée d'un élément de structure, un compromis approprié entre les propriétés mécaniques statiques et les propriétés de tolérance aux dommages doit d'être recherché. Celui-ci est désigné ici par « compromis de propriétés ». Des propriétés additionnelles, telles que la résistance à la corrosion, peuvent être incluses dans le compromis de propriétés, si nécessaire, et dans certains cas, il peut même être nécessaire de définir un compromis entre deux ou plus de deux propriétés dans le groupe de propriétés désigné par «résistance mécanique statique » ou « tolérance aux dommages », telles que la limite d'élasticité et l'allongement qui tendent à être incompatibles. Le besoin d'optimiser le compromis de propriétés est particulièrement important pour certaines parties ou éléments structuraux pour lesquels les meilleurs résultats pourraient être obtenus si la résistance mécanique statique était optimisée sur une extrémité géométrique et la tolérance aux dommages était optimisée sur l'autre extrémité géométrique. Le soudage de pièces présentant des caractéristiques optimales pour chaque partie de l'élément structural permet d'obtenir des éléments structuraux aux propriétés optimisées.

La demande de brevet EP1799391 (Alcan Rhenalu) enseigne un procédé de fabrication d'un élément de structure comprenant au moins deux parties en alliage d'aluminium présentant différents compromis de propriétés, lesdites au moins deux parties étant soudées et dans lequel l'une desdites parties est (i) choisie dans un alliage d'aluminium différent de l'autre desdites au moins deux parties et/ou (ii) choisie dans un état métallurgique initial différent de l'autre desdites au moins deux parties, et dans lequel au moins l'une desdites au moins deux parties a été pré-revenue avant d'être soudée, et dans lequel l'élément de structure a subi un revenu post-soudage conférant un état métallurgique final à chacune desdites au moins deux parties.

Le soudage par friction malaxage a été initié, au début des années 1990, par TWI (The Welding Institute) au Royaume-Uni, et a connu un développement rapide dans le domaine de l'assemblage des alliages d'aluminium. Son principe consiste à obtenir un soudage sans fusion par un fort cisaillement du métal au moyen d'un outil rotatif qui mélange les deux matériaux à assembler. La diminution de la contrainte d'écoulement est obtenue tout d'abord par un échauffement du métal par frottement d'un épaulement (« shoulder ») en surface du métal avant le déplacement de l'outil qui conduit de proche en proche au soudage. L'épaulement permet également de contenir le métal et de maintenir une pression en évitant l'éjection du métal en dehors de la zone soudée.

Le procédé permet d'éviter les problèmes de fissuration à chaud, ce qui permet notamment de souder des alliages considérés comme non soudables par fusion, comme par exemple les alliages 2XXX au magnésium ou les alliages 7XXX au cuivre, qui sont les alliages utilisés habituellement dans la construction aéronautique.

Les paramètres du procédé de soudage par friction malaxage sont principalement : le choix de la géométrie de l'outil, la vitesse de rotation et la vitesse d'avance de l'outil (aussi appelée vitesse de soudage) et la force appliquée à l'outil. Ces paramètres ne sont pas indépendants, il convient par exemple en général d'augmenter la vitesse de rotation quand la vitesse de soudage augmente. Par ailleurs, la vitesse de soudage optimale est en général inversement proportionnelle à l'épaisseur de soudage (voir par exemple « Le soudage par friction-malaxage », R. CAZES, Les Techniques de l'Ingénieur, BM 7 746 1-9).

La demande de brevet DE 199 53 260 A1 décrit systématiquement des possibilités de variation cyclique des paramètres vitesse d'avance, vitesse de rotation, force appliquée à l'outil, hauteur de l'outil sans préciser quelle variation sélectionner et dans quelles circonstances cette variation est avantageuse.

La demande de brevet US 2004-046003 décrit une variation cyclique de la vitesse de rotation de l'outil de façon à améliorer le mélange d'une métal plastifié.

Le brevet US 6,450,394 décrit un procédé pour former des éléments de structure d'avion en utilisant le soudage par friction malaxage. Ce brevet mentionne la possibilité de faire varier la vitesse d'avance et la vitesse de rotation pour adapter les conditions de soudage à des variations d'épaisseur des produits.

Les paramètres de soudage doivent être adaptés à l'alliage à souder, en particulier à sa dureté à chaud ou en particulier à sa contrainte d'écoulement à chaud. Pour chaque alliage dans un état métallurgique donné, on peut obtenir pour une épaisseur de soudage donnée des conditions de soudage optimales en termes de vitesse d'avance et de vitesse de rotation de l'outil. La vitesse d'avance optimale est en général la vitesse la plus élevée permettant une qualité de soudure satisfaisante, en particulier exempte de porosités et de défauts de surface. Lorsque l'on soude deux matériaux métalliques ayant des caractéristiques mécaniques, et en particulier ayant des contraintes d'écoulement à chaud différentes, on utilise, en général, des paramètres de soudage intermédiaires entre les paramètres les plus adaptés pour l'un et l'autre des alliages. Cependant, il s'avère difficile, voire impossible, de trouver des conditions intermédiaires satisfaisantes dans certains cas, en particulier lorsque les contraintes d'écoulement à chaud sont très différentes entre les matériaux à souder.

Il existe un besoin pour un procédé capable de fournir une solution au problème qui consiste à souder par soudage par friction malaxage deux ou plus de deux pièces en alliages métalliques dissemblable, ayant en particulier des contraintes d'écoulement à chaud très différentes.

## Objet de l'invention

L'invention a pour objet un procédé de soudage par friction malaxage d'au moins une première pièce en un alliage métallique A avec au moins une deuxième pièce en un alliage métallique B dissemblable tel que défini dans la revendication 1:

## Description des figures

La Figure 1 est un schéma général décrivant le procédé de soudage par friction malaxage.
La Figure 2 est un schéma de l'outil utilisé lors des essais. Les cotes indiquées sont en mm.
La Figure 3 est une vue en coupe de la soudure de l'essai N°1.
La Figure 4 est une vue en coupe de la soudure de l'essai N°2
La Figure 5 est une vue en coupe de la soudure de l'essai N°41
La Figure 6 est un extrait de l'enregistrement de la mesure du couple et de la vitesse d'avance pour l'essai 41.
La Figure 7 est un extrait de l'enregistrement de la mesure du couple et de la vitesse d'avance pour l'essai 46.
La Figure 8 est un extrait de l'enregistrement de la mesure du couple et de la vitesse d'avance pour l'essai 48.

## Description de l'invention

La désignation des alliages se fait en conformité avec les règlements de The Aluminium Association (AA), connus de l'homme du métier. Les définitions des états métallurgiques sont indiquées dans la norme européenne EN 515.

Sauf mention contraire, les caractéristiques mécaniques statiques, en d'autres termes la résistance à la rupture Rm, la limite d'élasticité conventionnelle à 0,2% d'allongement Rp0,2 et l'allongement à la rupture A, sont déterminées par un essai de traction selon la norme EN 10002-1, le prélèvement et le sens de l'essai étant définis par la norme EN 485-1.

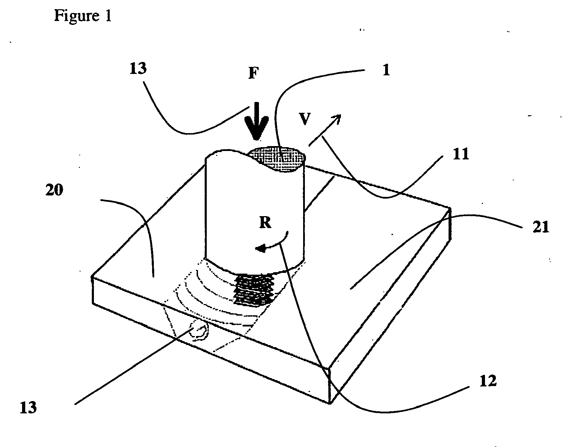

La figure 1 décrit une opération de soudage par friction malaxage. Deux pièces (20) et (21) sont accolées. Un outil (1) soumis à une force appliquée F dans la direction verticale (13) se déplace avec une vitesse d'avance V dans la direction horizontale tout en effectuant une rotation dans le sens (12) avec une vitesse de rotation R. Le côté avance est le côté où le sens local de la surface de l'outil dû à la rotation de l'outil et le sens de soudage (11) sont identiques, la pièce (20) est située côté avance. Le côté retrait est le côté où le sens local de la surface de l'outil dû à la rotation de l'outil et le sens de soudage (11) sont opposés, la pièce (21) est située côté retrait. La vitesse de rotation R de l'outil est la vitesse à laquelle l'outil tourne dans le sens de rotation (12). La vitesse d'avance est la vitesse à laquelle l'outil se déplace dans le sens de soudage (11). Dans le cadre de l'invention, on appelle vitesse d'avance moyenne la moyenne des vitesses d'avance instantanées pendant une durée donnée.

L'opération de soudage par friction malaxage comporte typiquement trois phases, une phase d'engagement durant laquelle l'outil est mis en contact avec les pièces à souder, une phase permanente durant laquelle l'outil progresse de façon régulière sur les pièces à souder et une phase de dégagement durant laquelle l'outil est écarté des pièces à souder. Des régimes spécifiques en termes de vitesse de rotation et de vitesse d'avance peuvent être dans certains cas utilisés pendant les phases d'engagement et de dégagement. La présente invention concerne le régime permanent, c'est-à-dire les paramètres de procédé utilisés pendant la phase permanente.

Pour un alliage métallique donné, dans un état métallurgique donné et pour une épaisseur soudée donnée, il existe des paramètres de soudage optimaux permettant d'obtenir une soudure dont la qualité visuelle tant en surface qu'en coupe est satisfaisante et dont la résistance mécanique est maximale tout en utilisant la vitesse de soudage la plus élevée possible. Les paramètres optimaux sont définis essentiellement par la vitesse d'avance, par la vitesse de rotation et par la force appliquée. On peut estimer que la détermination de ces paramètres optimaux est précise à plus ou moins 10%. Le couple mesuré nécessaire à la rotation de l'outil dans ces conditions optimales est une indication des caractéristiques rhéologiques de l'alliage considéré. Par couple mesuré, on entend ici le couple mesuré lors du soudage auquel on a soustrait le couple mesuré lors de la rotation de l'outil à vide. A partir des paramètres optimaux et du couple mesuré on définit pour un alliage donné dans un état métallurgique donné et une épaisseur soudée donnée une énergie de soudage.

$$\text{Energie de soudage (J/m)} = \text{couple mesuré} \times \text{vitesse de rotation} \times 2\pi \text{ / vitesse d'avance}$$

Le couple mesuré est exprimé en N.m, la vitesse de rotation en tours par minute et la vitesse d'avance en m par minute.

Le tableau 1 de l'exemple 1 donne les paramètres optimaux pour les alliages AA2050 à l'état T3 et AA7449 à l'état T6 pour une épaisseur soudée de 20 mm. L'énergie de soudage de l'alliage AA7449 à l'état T6 est près de trois fois supérieure à celle de l'alliage AA2050 à l'état T3 pour l'épaisseur soudée.

La présente invention permet de souder des pièces en alliages métalliques dissemblables. Par alliages métalliques dissemblables on entend en particulier des alliages métalliques pour lesquels l'énergie de soudage est significativement différente, d'un facteur 1,5 voire 2 ou 2,5. Il peut s'agir par exemple de deux alliages d'aluminium dont la contrainte d'écoulement à chaud est très différente, ou d'un alliage d'aluminium et d'un alliage de titane, ou encore d'acier ou d'un alliage de cuivre et d'un alliage de titane ou d'aluminium. Parmi les alliages d'aluminium ayant une énergie de soudage élevée, l'invention est avantageuse en particulier pour les alliages des familles 5XXX et 7XXX. Le tableau 7 indique d'autres énergies de soudages mesurées ou estimées pour des tôles en alliage AA7449, AA2022 et AA7040. Les résultats du tableau 7 montrent que l'énergie de soudage des tôles assemblées telles que décrites dans EP1799391 ne présentaient pas une énergie de soudage significativement différente.

L'invention est particulièrement avantageuse pour le soudage par friction malaxage de pièces en alliages 7XXX ayant limite élastique est supérieure à 500 MPa et de préférence supérieure à 530 MPa dans l'état métallurgique final avec un autre alliage métallique dissemblable. Par état métallurgique final on entend l'état métallurgique de la pièce après un éventuel traitement de revenu de l'assemblage soudé.

Parmi les alliages ayant une énergie de soudage plus faible, l'invention est avantageuse en particulier pour les alliages des familles 2XXX, 6XXX et 8XXX. L'invention est particulièrement avantageuse pour le soudage par friction malaxage de pièces en alliage d'aluminium de type aluminium lithium, c'est-à-dire contenant au moins 0,8 % en poids de lithium, avec une pièce en alliage métallique dissemblable, en particulier une pièce en alliages 7XXX ayant une limite élastique supérieure à 500 MPa dans l'état métallurgique final

Des pièces en alliage sélectionné dans le groupe constitué de AA2X39, AA2X24, AA2X98, AA2X95, AA2X96 AA2X50, AA6X56, AA6X82 peuvent être soudés par soudage par friction malaxage avec des pièces en alliage sélectionné dans le groupe constitué de AA7X49, AA7X55, AA7X50, AA7X75, AA7X85, AA5X82 dans le cadre de la présente invention. Par AA7X49 on entend les alliages AA7049, AA7149, AA7249, AA7349, AA7449, *mutatis mutandis* pour les autres alliages cités. Un alliage de titane préféré est l'alliage Ti-6Al-4V.

Selon l'invention, des pièces en alliages métalliques dissemblables sont soudées par friction malaxage par un procédé dans lequel

- on accole les pièces,
- à l'aide d'un outil en rotation se déplaçant avec une vitesse appelée vitesse d'avance on réalise un joint entre les pièces,

la vitesse d'avance de l'outil présentant en régime permanent au moins deux modes alternés, un premier mode dans lequel on utilise une première vitesse d'avance moyenne V1 et un second mode dans lequel on utilise une seconde vitesse d'avance moyenne V2, les vitesses V1 et V2 étant significativement différentes, typiquement d'au moins 20% et de préférence au moins 30% de la plus élevée des vitesses d'avance, la plus faible des vitesses d'avance pouvant être nulle.

Les pièces peuvent être accolées par toute géométrie permettant de réaliser un joint de soudage par friction malaxage, la précision de l'accolement n'étant pas critique. Le soudage s'exécute essentiellement sur des pièces mises bord à bord mais accepte d'autres configurations de joints tels que par exemple le soudage à clin (soudage d'angle ou en T) ou le soudage par superposition.

De façon surprenante, les présents inventeurs ont constaté que l'alternance d'un temps chaud (pour lequel la vitesse d'avance est faible voire nulle) et d'un temps froid (pour lequel la vitesse d'avance est élevée), permet de solutionner la différence importante de contrainte d'écoulement des alliages à souder. Les vitesses V1 et V2 doivent être significativement différentes typiquement d'au moins 20% et de préférence d'au moins 30% pour observer l'effet recherché. Dans un mode de réalisation avantageux de l'invention, la différence entre V1 et V2 est au moins égale à 30 mm/mn.

De manière préférée, les premier et second modes sont alternés au sein d'un cycle dont la durée T est inférieure à 15 secondes et de préférence comprise entre 0,1 et 10 secondes et de façon avantageuse entre 0,5 et 7 secondes. Le nombre de cycles réalisés par mm de soudure dépend de la vitesse de soudage utilisée, elle-même dépendante en particulier de la composition des alliages métalliques et de l'épaisseur des pièces, il est typiquement de 15 cycles pour 50 mm de soudure.

De manière préférée le premier mode est maintenu pendant une durée T1 et le second mode est maintenu pendant une durée T2, T1 et T2 étant au moins égal à 20% de la durée T. Les durées T1 et T2 représentent en effet une proportion suffisante de la durée du cycle pour que l'effet sur la qualité de soudure soit observé. Dans un mode de réalisation avantageux de l'invention, les durées T1 et T2 sont sensiblement égales, c'est-à-dire qu'elles ne différent pas de plus de 20%. D'une façon préférée les paramètres T1, T2, exprimés en seconde et V1, V2, exprimés en mm/s obéissent à la relation : $1 < (T1V1 - T2V2)^2 < 400$. Typiquement, l'avance réalisée pendant le temps froid (vitesse d'avance élevée) est de l'ordre de 3 mm tandis que l'avance réalisée pendant le temps chaud (vitesse d'avance lente) est inférieure à 1 mm.

Les paramètres à utiliser pour le soudage peuvent être évalués sur la base des paramètres optimaux déterminés pour chaque pièce prise isolément. Un paramètre important est la vitesse d'avance moyenne de soudage en régime permanent, c'est-à-dire la vitesse d'avance moyenne pendant toute la durée du régime permanent. A titre d'exemple, quand on utilise uniquement deux modes ayant pour vitesses d'avance moyenne V1 et V2 pendant des durées T1 et T2, on a $V = (T1 \times V1 + T2 \times V2) / (T1 + T2)$. De manière avantageuse, on utilise comme vitesse d'avance moyenne V en régime permanent une vitesse comprise dans la plage définie par la vitesse d'avance optimale de la pièce requérant l'énergie de soudage la plus élevée plus ou moins 20%.

Les temps chaud et froids peuvent être amplifiés en combinant une variation de la vitesse de rotation à la variation de la vitesse d'avance. Cependant, il est avantageux d'utiliser une vitesse de rotation de l'outil sensiblement constante en régime permanent. En effet, le moteur de l'appareillage de soudage par friction malaxage supporte mal les variations de vitesse de rotation de l'outil et ces variations entrainent une dégradation sensible de la durée de vie de l'appareillage. Les présents inventeurs pensent par ailleurs que la qualité de soudure est sa reproductibilité sont meilleures lorsque la vitesse de rotation de l'outil est sensiblement constante en régime permanent.

De manière préférée, la vitesse de rotation l'outil est comprise dans la plage définie par la vitesse de rotation de l'outil optimale de la pièce requérant l'énergie de soudage la plus élevée plus ou moins 20%. Les présents inventeurs ont constaté que lorsque la vitesse de rotation est supérieure à la vitesse de rotation de l'outil optimale de la pièce requérant l'énergie de soudage la plus élevée plus 20%, la température atteinte pendant le temps chaud peut devenir trop élevée et un risque de flash existe et, par ailleurs, le couple mesuré peut être instable ce qui peut se traduire par une qualité de soudure irrégulière.

La position relative des éléments à souder peut, pour certains couples d'alliages, avoir un effet sur la qualité de la soudure. Dans une réalisation avantageuse de l'invention la pièce requérant l'énergie de soudage la plus élevée est placée côté retrait.

L'invention peut être appliquée au soudage de pièces de toute épaisseur. Toutefois, l'invention est particulièrement avantageuse lorsque l'épaisseur de soudage est comprise entre 1 et 40 mm, de préférence entre 10 et 30 mm et de manière encore plus préférée entre 12 et 20 mm. Les vitesses de soudages sont adaptées à l'épaisseur soudée. Dans un mode de réalisation avantageux dans lequel la première et la seconde pièce sont en alliage d'aluminium, la différence entre V1 et V2 exprimés en mm/mn est au moins égale à 600/e, où e est l'épaisseur de soudage exprimée en mm.

L'invention permet d'obtenir des assemblages soudés par soudage par friction malaxage qui n'auraient pas pu être obtenus par le procédé selon l'art antérieur car la qualité de la soudure et les propriétés mécaniques auraient été insuffisantes. Ainsi l'invention permet d'obtenir un assemblage soudé par soudage par friction malaxage entre une première pièce et une deuxième pièce en alliages métalliques caractérisé en ce que l'énergie de soudage des première et deuxième pièces diffère d'un facteur au moins égal à 1,5 dans l'état métallurgique utilisé lors du soudage pour l'épaisseur soudée.

L'assemblage soudé, ainsi obtenu par le procédé suivant l'invention, présente avantageusement un allongement d'au moins 1,5 %, et de préférence d'au moins 2,5% pour une longueur d'extensomètre L0 = 80 mm et/ou une résistance à rupture Rm égale à au moins 46% et de préférence à au moins 48% de la résistance à rupture de la pièce présentant la résistance à rupture la plus élevée. Les assemblages soudés, ainsi obtenu par le procédé suivant l'invention, sont avantageux en particulier pour la réalisation de panneaux ou de profilés destinés à la fabrication de véhicules de transport. En particulier, les assemblages selon l'invention sont utiles pour la fabrication de véhicules ferroviaires, de véhicules de transport public, de transport maritime, de véhicules automobiles et de véhicules aériens. Les assemblages soudés selon l'invention trouvent des applications particulièrement avantageuses dans la construction aéronautique en ce qui concerne la fabrication d'éléments de structure. Le terme « élément de structure » se réfère à un élément utilisé en construction mécanique pour lequel les caractéristiques mécaniques statiques et / ou dynamiques ont une importance particulière pour la performance et l'intégrité de la structure, et pour lequel un calcul de la structure est généralement prescrit ou effectué. Il s'agit typiquement d'une pièce mécanique dont la défaillance est susceptible de mettre en danger la sécurité de ladite construction, de ses utilisateurs, de ses usagers ou d'autrui. Pour un avion, ces éléments de structure comprennent notamment les éléments qui composent le fuselage (tels que la peau de fuselage (fuselage skin en anglais), les raidisseurs ou lisses de fuselage (stringers), les cloisons étanches (bulkheads), les cadres de fuselage (circumferential frames), les ailes (tels que la peau de voilure (wing skin), les raidisseurs (stringers ou stiffeners), les nervures (ribs) et longerons (spars)) et l'empennage composé notamment de stabilisateurs horizontaux et verticaux (horizontal or vertical stabilisers), ainsi que les profilés de plancher (floor beams), les rails de sièges (seat tracks) et les portes.

**Exemples**

Exemple 1

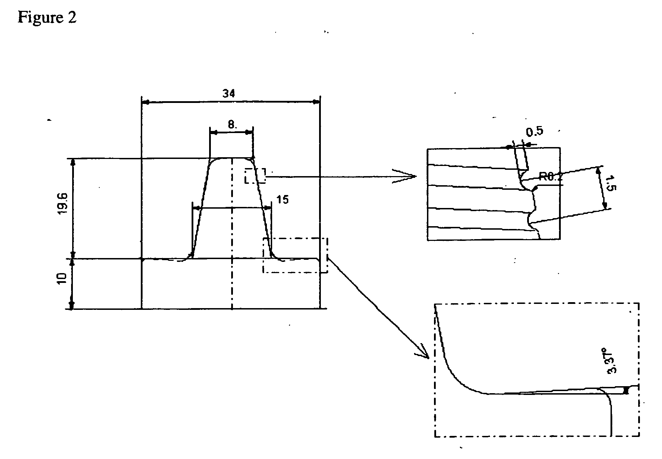

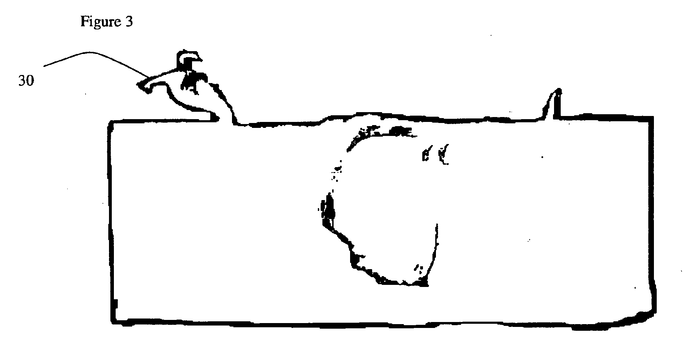

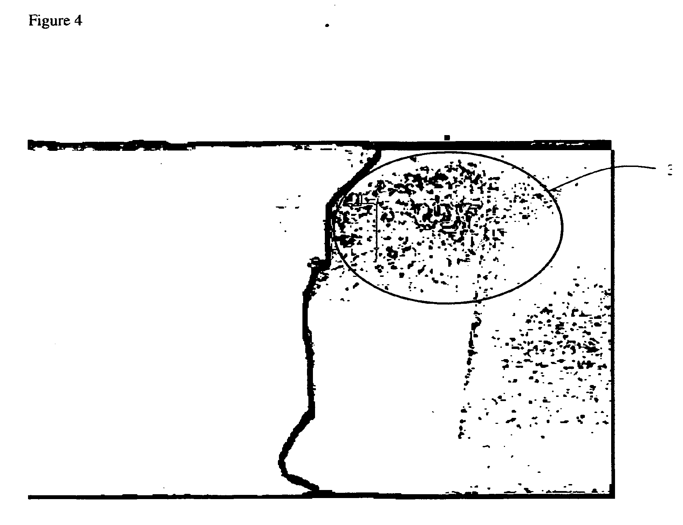

Dans cet exemple, on a réalisé des lignes de soudage par friction malaxage. On a déterminé la vitesse de soudage optimale, la vitesse de rotation optimale et l'énergie de soudage pour des tôles d'épaisseur 40 mm en alliage AA2050 à l'état T351 et en alliage AA7449 à l'état T6, pour une épaisseur de soudage de 20 mm, à l'aide d'un outil conique à 3 méplats à 120° profonds de 0.5 mm, dont les caractéristiques géométriques en coupe transversale sont données Figure 2 (cotes indiquées en mm), sur une machine MTS Istir®. Un usinage de 0,2 mm a été effectué de part et d'autre des tôles pour éliminer les oxydes de surface. Les conditions optimales correspondent à la vitesse de soudage la plus élevée pouvant être atteinte tout en obtenant une qualité de soudure satisfaisante tant en coupe (en particulier sans porosités, voir Figure 4) qu'en surface (en particulier sans flashs, voir Figure 3).
Les résultats obtenus sont donnés dans le Tableau 1

Tableau 1 : conditions de soudage par friction malaxage optimales

| Alliage | Ep. Tôle (mm) | Ep. Soudée (mm) | Couple (N.m) | Force appliquée F (kN) | Vitesse de rotation (tr/mn) | Vitesse d'avance (mm/mn) | Energie de Soudage (J/m) |
|---|---|---|---|---|---|---|---|
| 2050-T351 | 40 | 20 | 250 | 66 | 230 | 190 | $1,9\ 10^6$ |
| 7449-T6 | 40 | 20 | 170 | 55 | 250 | 55 | $4,85\ 10^6$ |

Exemple 2

Dans cet exemple on a essayé de souder par friction malaxage avec la même machine et le même outil que dans l'exemple 1 des tôles en alliage AA2050 à l'état T351 avec des tôles en alliage AA7449 à l'état T6. Les tôles étaient fixées sur la table de soudage à l'aide de 3 brides de chaque côté. La vitesse de soudage et la vitesse de rotation de l'outil ont été maintenues constantes en régime permanent. Les paramètres utilisés pour les différents essais sont fournis dans le tableau 2, ainsi que les résultats obtenus.

Tableau 2. Essais de soudage par friction malaxage à vitesse d'avance constante

| N° Essai | Côté avance | Côté retrait | Vitesse de rotation de l'outil (tour/mn) | Vitesse d'avance (mm/mn) | Force appliquée | Aspect de surface | Compacité du joint |
|---|---|---|---|---|---|---|---|
| 1 | 2050 | 7449 | 350 | 50 | 55 | Défectueux | Bonne |
| 2 | 2050 | 7449 | 250 | 50 | 55 | Défectueux | Bonne |
| 3 | 2050 | 7449 | 350 | 100 | 55 | Défectueux | Bonne |
| 4 | 2050 | 7449 | 200 | 50 | 55 | Défectueux | Bonne |
| 30 | 2050 | 7449 | 250 | 100 | 55 | Défectueux | Bonne |
| 8 | 7449 | 2050 | 250 | 50 | 50 | Bon | Défectueuse |
| 10 | 7449 | 2050 | 250 | 70 | 55 | Bon | Défectueuse |
| 19 | 7449 | 2050 | 300 | 70 | 55 | Arrêt - limite machine | |

(suite)

| N° Essai | Côté avance | Côté retrait | Vitesse de rotation de l'outil (tour/mn) | Vitesse d'avance (mm/mn) | Force appliquée | Aspect de surface | Compacité du joint |
|---|---|---|---|---|---|---|---|
| 25 | 7449 | 2050 | 250 | 70 | 60 | Bon | Défectueuse |
| 26 | 7449 | 2050 | 250 | 70 | 57 | Bon | Défectueuse |

La Figure 3 est une coupe de la soudure obtenue pour l'essai 1. La compacité du joint est bonne mais on observe de nombreux défauts en surface appelés « flashs » (30). La Figure 4 est une coupe de la soudure obtenue pour l'essai 2. La qualité de surface est satisfaisante (absence de flashs) mais la compacité du joint est défectueuse : on observe de nombreuses porosités dans la zone (31).

Exemple 3

Dans cet exemple, on a réalisé des soudures par friction malaxage selon l'invention avec la même machine et le même outil que dans les exemples 1 et 2 de tôles en alliage AA2050 à l'état T351 avec des tôles en alliage AA7449 à l'état T6.

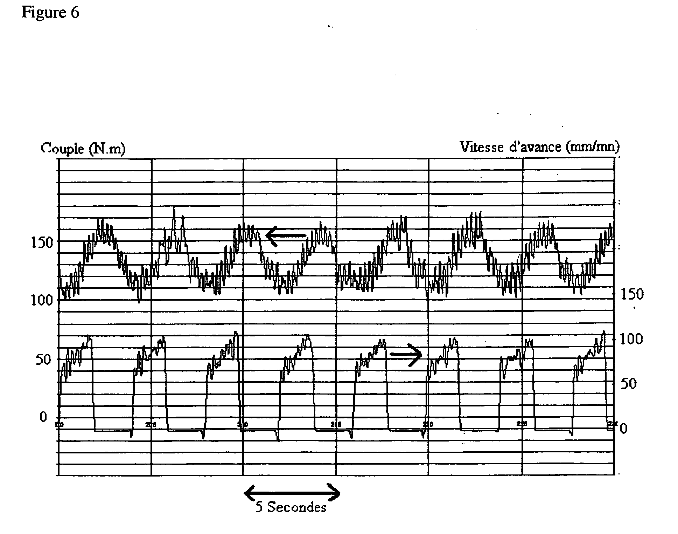

Les tôles étaient fixées sur table de soudage à l'aide de 3 brides de chaque côté. La tôle en alliage 2050 T3 était disposée du côté avance et celle en alliage 7449 T6 du côté retrait.. Les paramètres utilisés pour les différents essais sont fournis dans le tableau 3, ainsi que les résultats obtenus. Les figures 6, 7, et 8 montrent un extrait de l'enregistrement de la mesure du couple et de la vitesse d'avance pour les essais 41, 46 et 48, respectivement.

Tableau 3. Essais de soudage par friction malaxage à vitesse d'avance pulsée

| N° Essai | T (sec) | V1 (mm/min) | T1 (sec) | V2 (mm/min) | T2 (sec) | Vitesse de rotation de l'outil (tour/mn) | Aspect de surface | Compacité du joint |
|---|---|---|---|---|---|---|---|---|
| 41 | 3,8 | 100 | 1,8 | 0 | 2 | 250 | Bon | Bonne |
| 46 | 3,8 | 100 | 1,8 | 0 | 2 | 300 | Correct | Correcte |
| 48 | 3,8 | 110 | 1,65 | 25 | 1,5 | 250 | Correct | Bonne |

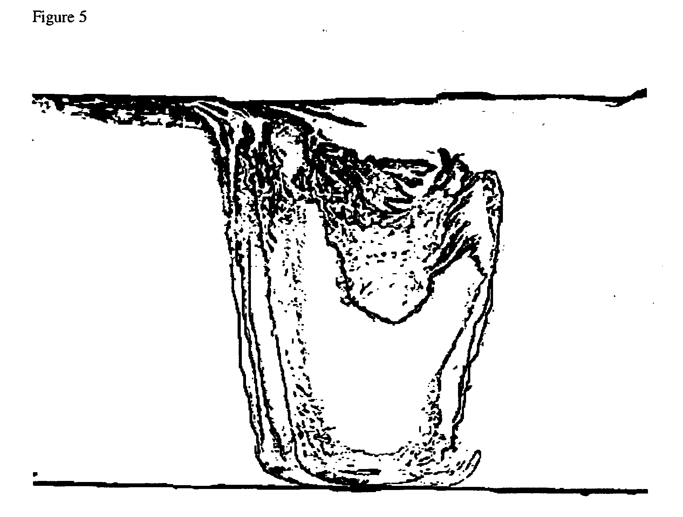

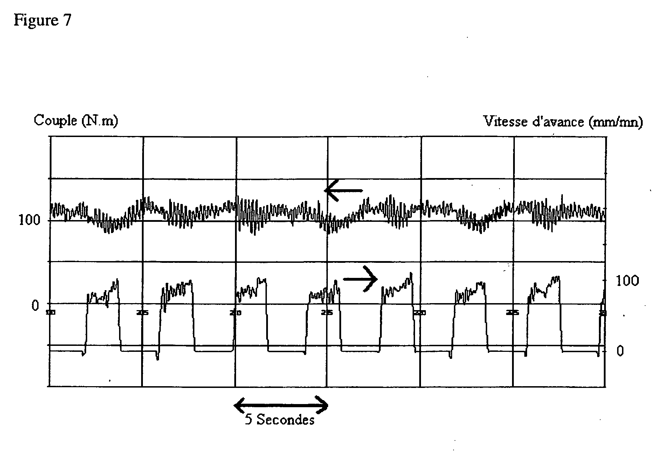

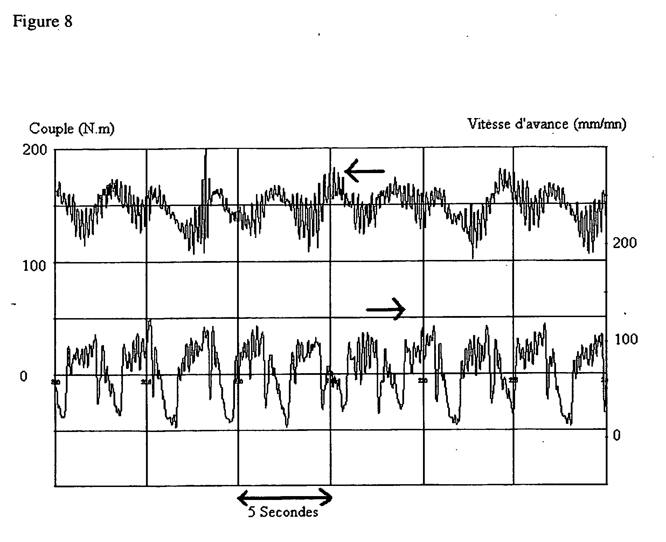

Les meilleurs résultats ont été obtenus pour l'essai 41. La figure 5 est une coupe de la soudure obtenue pour l'essai 41. Elle est caractérisée par l'absence de flashs et par une compacité satisfaisante. Pour l'essai 46 ; la présence de quelques flashs est observée ainsi que quelques défauts de compacité, néanmoins ces caractéristiques sont jugées correctes. Pour l'essai 48, l'aspect de surface est correct (présence de quelques flashs) et la compacité du joint est bonne. La Figure 6 montre que le couple mesuré pour l'essai 41 est stable et reproductible pour chaque cycle, ce qui indique que la soudure peut être réalisée sans difficultés sur une longueur importante. Les Figures 7 et 8 montrent que les couples mesurés pour les essais 46 et 48 sont moins stables que dans le cas de l'essai 41, ce qui indique que des difficultés pourraient être rencontrées pour une soudure de grande longueur.

Les caractéristiques mécaniques statiques des essais 2 et 41 ont été mesurées (longueur d'extensomètre L0 = 80 mm) après un revenu post soudage de 18 h à 155 °C et sont rapportées dans le tableau 4. Les caractéristiques mécaniques d'échantillons non soudés en alliage 2050 et 7449 dans le même état métallurgique sont également présentées dans le Tableau 4. L'allongement atteint est beaucoup plus élevé pour l'assemblage réalisé selon le procédé de l'invention. On observe également une augmentation significative de la résistance à la rupture.

Tableau 4. Caractéristiques mécaniques statiques mesurées pour les essais 2 et 41

| N° Essai | Rp0.2 (MPa) | Rm (MPa) | A (%) | Rm(soudé)/ Rm 7449 |
|---|---|---|---|---|
| 2050 T8 | 520 | 549 | 11,58 | |
| 7449 T79 | 602 | 634 | 12,02 | |
| 2 | 254 | 267 | 0,4 | 42% |

(suite)

| N° Essai | Rp0.2 (MPa) | Rm (MPa) | A (%) | Rm(soudé)/ Rm 7449 |
|---|---|---|---|---|
| 41 | 244 | 312 | 2,7 | 49% |

Exemple 4

Dans cet exemple, on a soudé par friction malaxage dans les conditions définies à l'essai 41 des tôles en alliage AA2050 à l'état T8 avec des tôles en alliage AA7449 à l'état T6. Deux conditions de revenu ont été utilisées pour atteindre l'état T8, les conditions sont indiquées dans le Tableau 5.

Tableau 5. Essais de soudage réalisés avec différents revenu pré et post soudage

| N° Essai | Tôle côté avance | Tôle côté retrait | Revenu post soudage |
|---|---|---|---|
| 57 | 2050 - T3 | 7449 - T6 | 18h à 155 °C |
| 51 | 2050 - T8 (Revenu 8h à 155°C) | 7449 - T6 | 10h à 155 °C |
| 54 | 2050 - T8 (Revenu 18h à 155°C) | 7449 - T6 | 10h à 155 °C |

Pour les trois essais 51, 54 et 57, les soudures obtenues ont présenté un bon aspect de surface ainsi qu'une compacité satisfaisante.
Les caractéristiques mécaniques obtenues (longueur d'extensomètre L0 = 80 mm) sont présentées dans le Tableau 6.

Tableau 6. Caractéristiques mécaniques statiques mesurées pour les essais 51, 54 et 57

| N° Essai | Rp0.2 (MPa) | Rm (MPa) | A (%) | Rm(soudé)/ Rm 7449 |
|---|---|---|---|---|
| 2050 T8 | 520 | 549 | 11,58 | |
| 7449 T79 | 602 | 634 | 12,02 | |
| 57 | 248 | 336 | 2,55 | 53% |
| 51 | 243 | 345 | 2,88 | 54% |
| 54 | 244 | 343 | 2,99 | 54% |

Exemple 5

Dans cet exemple, on a déterminé ou estimé par comparaison avec d'autres alliages la vitesse de soudage optimale, la vitesse de rotation optimale et l'énergie de soudage pour des tôles d'épaisseur 13,5 ou 16 mm en alliage AA2022 à l'état T851, en alliage AA7040 à l'état T6 et en alliage AA7449 à l'état T6, pour une épaisseur de soudage de 13,5 ou 16 mm mm. Les conditions optimales correspondent à la vitesse de soudage la plus élevée pouvant être atteinte tout en obtenant une qualité de soudure satisfaisante tant en coupe (en particulier sans porosités, voir Figure 4) qu'en surface (en particulier sans flashs, voir Figure 3).
Les résultats obtenus sont donnés dans le Tableau 7

Tableau 7 : conditions de soudage par friction malaxage optimales

| Alliage | Ep. Tôle (mm) | Ep. Soudée (mm) | Couple (N.m) | Vitesse de rotation (tr/mn) | Vitesse d'avance (mm/mn) | Energie de Soudage (J/m) |
|---|---|---|---|---|---|---|
| 2022-T851 | 16 | 16 | 185 * | 200 * | 100 * | 2,32 16[6] * |
| 7040-T6 | 16 | 16 | 170 * | 230 | 100 | 2,46 10[6] * |
| 7449 - T6 | 13,5 | 13,5 | 123 | 270 | 90 | 2,32 10[6] |
| * : valeur estimée | | | | | | |

**Revendications**

1. Procédé de soudage par friction malaxage d'au moins une première pièce (20) en un alliage métallique A avec au moins une deuxième pièce (21) en un alliage métallique B dissemblable dans lequel :

   - on accole lesdites première et deuxièmes pièces (20, 21)
   - à l'aide d'un outil (1) en rotation se déplaçant avec une vitesse appelée vitesse d'avance on réalise un joint entre lesdites première et deuxième pièce (20, 21), **caractérisé en ce que** ladite vitesse d'avance de l'outil (1) présente en régime permanent au moins deux modes alternés, un premier mode dans lequel on utilise une première vitesse d'avance moyenne (V1) et un second mode dans lequel on utilise une seconde vitesse d'avance moyenne (V2), les vitesses (V1, V2) étant significativement différentes, typiquement d'au moins 20% et de préférence au moins 30% de la plus élevée des vitesses d'avance, la plus faible des vitesses d'avance (V1, V2) pouvant être nulle.

2. Procédé selon la revendication 1 dans lequel la différence entre V1 et V2 est au moins égale à 30 mm/mn.

3. Procédé selon la revendication 1 ou la revendication 2 dans lequel lesdits premier et second modes sont alternés au sein d'un cycle dont la durée T est inférieure à 15 secondes et de préférence comprise entre 0,1 et 10 secondes.

4. Procédé selon la revendication 3 dans lequel le premier mode est maintenu pendant une durée T1 et le second mode est maintenu pendant une durée T2, T1 et T2 étant au moins égal à 20% de la durée T.

5. Procédé selon la revendication 4 dans lequel les paramètres T1, T2, exprimés en seconde et V1, V2, exprimés en mm/s obéissent à la relation :

$$1 < (T1V1 - T2V2)^2 < 400.$$

6. Procédé selon une quelconque des revendications 1 à 5 dans lequel on détermine pour chacune desdites pièces (20, 21) une vitesse d'avance optimale et dans lequel la vitesse d'avance moyenne de soudage V en régime permanent est comprise dans la plage définie par la vitesse d'avance optimale de la pièce (20, 21) requérant l'énergie de soudage la plus élevée plus ou moins 20%.

7. Procédé selon une quelconque des revendications 1 à 6 dans lequel la vitesse de rotation de l'outil (1) est sensiblement constante en régime permanent.

8. Procédé selon la revendication 7 dans lequel on détermine pour chaque pièce (20,21) prise isolément une vitesse de rotation de l'outil (1) optimale et dans lequel la vitesse de rotation de l'outil (1) est comprise dans la plage définie par la vitesse de rotation de l'outil (1) optimale de la pièce requérant l'énergie de soudage la plus élevée plus ou moins 20%.

9. Procédé selon une quelconque des revendications 1 à 8 dans lequel la pièce (20, 21) requérant l'énergie de soudage la plus élevée est placée côté retrait.

10. Procédé selon une quelconque des revendications 1 à 9 dans lequel ladite première pièce (20) est en alliage d'aluminium.

11. Procédé selon la revendication 10 dans lequel la dite deuxième pièce (21) est en alliage d'aluminium.

12. Procédé selon la revendication 11 dans lequel la différence entre V1 et V2 exprimés en mm/mn est au moins égale à 600/e, où e est l'épaisseur de soudage exprimée en mm.

13. Procédé selon la revendication 11 ou la revendication 12 dans lequel ladite première pièce (20) est en alliage 7XXX et sa limite élastique est supérieure à 500 MPa dans l'état métallurgique final.

14. Procédé selon une quelconque des revendications 11 à 13 dans lequel ladite deuxième pièce est en alliage aluminium-lithium.

**15.** Procédé selon une quelconque des revendications 1 à 14 dans lequel l'épaisseur de soudage est comprise entre 1 et 40 mm, et de préférence entre 10 et 30 mm.

**Claims**

**1.** A friction stir welding process of at least a first part (20) made of metal alloy A with at least a second part (21) made of a dissimilar metal alloy B wherein:

- said first and second parts are placed in abutment (20, 21),
- a joint is made between said first and second parts (20, 21) using a rotating tool (1) moving at a speed referred to as the travel speed,

**characterized in that** said tool (1) travel speed has at least two alternated modes in continuous service, a first mode wherein a first average travel speed (V1) is used and a second mode wherein a second average travel speed (V2) is used, the speeds (V1, V2) being significantly different, typically by at least 20% and preferably by at least 30% of the fastest travel speed, with the slowest travel speed (V1, V2) being possibly zero.

**2.** The process according to claim 1 wherein the difference between V1 and V2 is at least 30 mm/min.

**3.** The process according to claim 1 or claim 2 wherein said first and second modes are alternated within a cycle whose duration T is less than 15 seconds and preferably between 0.1 and 10 seconds.

**4.** The process according to claim 3 wherein the first mode is maintained for a duration T1 and the second mode is maintained for a duration T2, T1 and T2 being at least equal to 20% of the duration T.

**5.** The process according to claim 4 wherein the parameters T1, T2, expressed in seconds and V1, V2, expressed in mm/s obey the relationship:

$$1 < (T1V1 - T2V2)^2 < 400.$$

**6.** The process according to any of claims 1 to 5 wherein an optimal travel speed is determined for each of said parts (20, 21) and wherein the average welding speed V in continuous service is within the range defined by the optimum travel speed of the part (20, 21) requiring the highest welding energy, plus or minus 20%.

**7.** The process according to any of claims 1 to 6 wherein the rotation speed of the tool (1) is essentially constant in continuous service.

**8.** The process according to claim 7 wherein an optimal tool (1) rotation speed is determined for each part (20, 21) taken separately and wherein the tool (1) rotation speed is included in the range defined by the optimal tool rotation speed of the part requiring the highest welding energy, plus or minus 20%.

**9.** The process according to any of claims 1 to 8 wherein the part (20, 21) requiring the highest welding energy is placed on the retreating side.

**10.** The process according to any of claims 1 to 9 wherein said first part (20) is made of aluminum alloy.

**11.** The process according to claim 10 wherein said second part (21) is made of aluminum alloy.

**12.** The process according to claim 11 wherein the difference between V1 and V2, expressed in mm/min., is at least equal to 600/e, where e is the welding thickness expressed in mm.

**13.** The process according to claim 11 or claim 12 wherein said first part (20) is made of 7XXX alloy and its yield strength is greater than 500 MPa in the final metallurgical state.

**14.** The process according to any of claims 11 to 13 wherein said second part (21) is made of aluminum-lithium alloy.

**15.** The process according to any of claims 1 to 14 wherein the welding thickness is between 1 and 40 mm, and preferably between 10 and 30 mm.

**Patentansprüche**

**1.** Verfahren zum Reibrührverschweißen mindestens eines ersten Werkstücks (20) aus einer Metalllegierung A mit mindestens einem zweiten Werkstück (21) aus einer ungleichen Metalllegierung B, bei dem

- das erste und zweite Werkstück (20, 21) nebeneinander angeordnet werden,
- mit einem rotierenden Werkzeug (1), das sich mit einer sogenannten Vorschubgeschwindigkeit bewegt, eine Schweißnaht zwischen dem ersten und zweiten Werkstück (20, 21) hergestellt wird,

**dadurch gekennzeichnet, dass** die Vorschubgeschwindigkeit des Werkzeugs (1) im Dauerbetrieb mindestens zwei alternierende Modi aufweist, einen ersten Modus, in dem eine erste mittlere Vorschubgeschwindigkeit (V1) verwendet wird, und einen zweiten Modus, in dem eine zweite mittlere Vorschubgeschwindigkeit (V2) verwendet wird, wobei die Geschwindigkeiten (V1, V2) signifikant voneinander verschieden sind, typischerweise um mindestens 20% und vorzugsweise mindestens 30% der höchsten Vorschubgeschwindigkeit, wobei die niedrigste der Vorschubgeschwindigkeiten (V1, V2) Null sein kann.

**2.** Verfahren nach Anspruch 1, bei dem die Differenz zwischen V1 und V2 mindestens gleich 30 mm/min ist.

**3.** Verfahren nach Anspruch 1 oder 2, bei dem der erste und zweite Modus innerhalb eines Zyklus alternieren, dessen Dauer T kleiner als 15 Sekunden ist und vorzugsweise zwischen 0,1 und 10 Sekunden liegt.

**4.** Verfahren nach Anspruch 3, bei dem der erste Modus für eine Dauer T1 und der zweite Modus für eine Dauer T2 beibehalten wird, wobei T1 und T2 mindestens 20 % der Dauer T betragen.

**5.** Verfahren nach Anspruch 4, bei dem die Parameter T1, T2 ausgedrückt in Sekunden und V1, V2 ausgedrückt in mm/s der Beziehung $1 < (T1V1 - T2V2)^2 < 400$ genügen.

**6.** Verfahren nach irgendeinem der Ansprüche 1 bis 5, bei dem für jedes der Werkstücke (20, 21) eine optimale Vorschubgeschwindigkeit bestimmt wird und bei dem die mittlere Schweißvorschubgeschwindigkeit V im Dauerbetrieb in den Bereich fällt, der durch die optimale Vorschubgeschwindigkeit desjenigen Werkstücks (20, 21) definiert ist, das die höchste Schweißenergie plus oder minus 20 % erfordert.

**7.** Verfahren nach irgendeinem der Ansprüche 1 bis 6, bei dem die Rotationsgeschwindigkeit des Werkzeugs (1) im Dauerbetrieb weitgehend konstant ist.

**8.** Verfahren nach Anspruch 7, bei dem für jedes Werkstück (20, 21) einzeln genommen eine optimale Rotationsgeschwindigkeit des Werkzeugs (1) bestimmt wird und bei dem die Rotationsgeschwindigkeit des Werkzeugs (1) in den Bereich fällt, der durch die optimale Rotationsgeschwindigkeit des Werkzeugs (1) desjenigen Werkstücks definiert ist, das die höchste Schweißenergie plus oder minus 20 % erfordert.

**9.** Verfahren nach irgendeinem der Ansprüche 1 bis 8, bei dem das Werkstück (20, 21), das die höchste Schweißenergie erfordert, auf der Entnahmeseite angeordnet ist.

**10.** Verfahren nach irgendeinem der Ansprüche 1 bis 9, bei dem das erste Werkstück (20) aus einer Aluminiumlegierung ist.

**11.** Verfahren nach Anspruch 10, bei dem das zweite Werkstück (20) aus einer Aluminiumlegierung ist.

**12.** Verfahren nach Anspruch 11, bei dem die Differenz zwischen V1 und V2 ausgedrückt in mm/min mindestens gleich 600/e ist, wobei e die Schweißdicke ausgedrückt in mm ist.

**13.** Verfahren nach Anspruch 11 oder 12, bei dem das erste Werkstück (20) aus einer 7xxx-Legierung ist und seine Dehngrenze im Werkstoffendzustand mehr als 500 MPa beträgt.

**14.** Verfahren nach irgendeinem der Ansprüche 11 bis 13, bei dem das zweite Werkstück (21) aus einer Aluminium-Lithium-Legierung ist.

**15.** Verfahren nach irgendeinem der Ansprüche 1 bis 14, bei dem die Schweißdicke zwischen 1 und 40 mm und vorzugsweise zwischen 10 und 30 mm liegt.

Figure 1

Figure 2

Figure 3

30

Figure 4

Figure 5

Figure 6

Figure 7

Couple (N.m)                                                    Vitesse d'avance (mm/mn)

5 Secondes

Figure 8

Couple (N.m)  Vitesse d'avance (mm/mn)

5 Secondes

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2006054666 A
- EP 1799391 A, Alcan Rhenalu
- DE 19953260 A1
- US 2004046003 A
- US 6450394 B

**Littérature non-brevet citée dans la description**

- **R. CAZES.** Le soudage par friction-malaxage. *Les Techniques de l'Ingénieur, BM,* vol. 7 (746), 1-9